# EUROPÄISCHE PATENTSCHRIFT

(11) **EP 0 356 881 B1**
(45) Veröffentlichungstag und Bekanntmachung des Hinweises auf die Patenterteilung: **29.09.1993**
(21) Anmeldenummer: 89115448.6
(22) Anmeldetag: 22.08.1989
(51) Int. Cl.: C07F 7/16

(54) **Verfahren zur Aufarbeitung von Hydrolyserückständen aus der Organochlorsilansynthese**
Process for reprocessing hydrolysis residues from methylchlorosilane synthesis
Procédé de retraitement de restes d'hydrolyse de la synthèse du méthylchlorosilane

(30) Priorität: 01.09.1988 DE 3829582
(43) Veröffentlichungstag der Anmeldung: 07.03.1990
(73) Patentinhaber: BAYER AG, 51368 Leverkusen (DE)
(72) Erfinder: Degen, Bruno, Dr., D-5203 Much (DE); Feldner, Kurt, Dr., D-5090 Leverkusen (DE)

(56) Entgegenhaltungen:
- EP-A- 0 210 418
- US-A- 4 244 818

## Beschreibung

Die vorliegende Erfindung betrifft ein Verfahren zur Aufarbeitung von Hydrolyserückständen, die bei der Hydrolyse von feststoffhaltigen Polysilanschlämmen aus der Organochlorsilansynthese nach dem Direktverfahren anfallen. Insbesondere bezieht sich die Erfindung auf die Aufarbeitung von Hydrolyserückständen aus der Methylchlorsilansynthese.

Organochlorsilane und insbesondere die Methylchlorsilane dienen als Ausgangsmaterialien für die Herstellung von Siliconen, die in weiten Bereichen Anwendung finden, so z.B. als Kautschuke, Fugendichtmassen, Öle, Bautenschutzmittel usw. Besonders erwünscht bei der Herstellung der Methylchlorsilane ist das Dimethyldichlorsilan, welches in hoher Ausbeute erhalten wird, wenn die Direktreaktion von Silicium mit Methylchlorid durch Kupfer bzw. Kupferverbindungen katalysiert wird.

Das Verfahren ist grundlegend in der US-PS 2380995 beschrieben. Die Herstellung von Methylchlorsilanen nach diesem Verfahren wird weltweit im industriellen Maßstab betrieben, wobei man die Reaktion üblicherweise in kontinuierlich betriebenen Fließbettreaktoren durchführt.

Bei der Durchfürung des Direktverfahrens in Fließbettreaktoren werden zusammen mit dem Reaktionsprodukt, der Rohsilanmischung, und nicht umgesetztem Methylchlorid ständig auch die Feinstanteile von Silicium, Katalysator und unumgesetzter Kontaktmasse ausgetragen.

Diese Staubanteile werden häufig zusammen mit den höchstsiedenden Reaktionsproduktion (Kp₇₆₀ > 160°C) in einem sogenannten Schlammkessel mit nachgeschaltetem Waschturm gesammelt. Die Temperatur des unter dem üblichen Überdruck von 1,5 bis 10 bar stehenden Kessels wird im allgemeinen so eingestellt, daß das Gemisch aus Feststoff und kondensierten Anteilen genügend dünnflüssig gehalten wird, um den Austrag aus diesem Kessel zu ermöglichen.

Gemäß der deutschen Patentschrift 2362494 kann der Kesselinhalt in einen bevorzugt unter Normaldruck stehenden Rührbehälter entspannt und die noch destillierbaren Anteile aus dem Gemisch durch Erhitzen ausgetrieben werden. Der Inhalt dieses Kessels wird dann in der Regel einer Hydrolyse zugeführt.

Die Hydrolyse selbst kann wie in DE-PS 2362494 beschrieben in einem Fallrohr durchgeführt werden. Der Nachteil ist, daß durch die kurzen Kontaktzeiten die Hydrolyse oft nur unvollständig verläuft und große Mengen an Wasser gebraucht werden.

Die DE-OS 3005743 beschreibt ein Hydrolyseverfahren, bei dem die unangenehme Eigenschaft des Klebens der Hydrolysate durch Zusatz von Mineralöl verhindert wird. Da aber die Hydrolysate als wertlos betrachtet und deponiert werden, ist die zusätzliche organische Belastung nachteilig.

Aus der EP 089783 geht hervor, daß das Problem des Klebens auch durch die Einhaltung eines Mindestchlorgehaltes bewältigt werden kann, was aber eine technisch schwer zu lösende Aufgabe ist.

Bei all den erwähnten Verfahren entsteht eine salzsaure Suspension, bei der das mehr oder weniger feste Hydrolysat als wertlos gilt und deponiert werden muß. Die Hydrolysate sind allerdings nicht problemlos, denn sie enthalten meist 2 bis 10 % überwiegend metallisches Kupfer, welches aus dem deponierten Hydrolysat teilweise eluiert werden kann und somit eine Gefahr für das Grundwasser darstellen kann. Darüber hinaus sind die meisten erhaltenen Hydrolysate oxidationsempfindlich, ja sie neigen in manchen Fällen sogar zur Selbstentzündung, was einer ordnungsgemäßen Deponierung entgegensteht.

Die EP 0210418 beschreibt nun ein Verfahren, bei dem die Hydrolyse in Wasser oder einer stark verdünnten Salzsäure, in einem Rührwerksbehälter mit einem schnell laufenden Scheibenrührer ausgeführt wird, wobei dieser Behälter nicht mit Strombrechern ausgerüstet ist, so daß sich eine Trombe ausbilden kann, in die das zu hydrolysierende Material eingetragen wird. Die bevorzugte Temperatur liegt dabei zwischen 60 und 90°C. Man erhält so eine Suspension mit feinteiligen festen Hydrolysaten, in denen mehr als 90 % der Feststoffteilchen Durchmesser < 5 mm aufweisen.

Die so erhaltenen Suspensionen werden anschließend mit Sauerstoff enthaltenden Gasen oxidiert, was gemäß der oben zitierten Erfindung bevorzugt mit technisch reinem Sauerstoff unter gegenüber Atmosphärendruck erhöhtem Druck erfolgt.

Nach beendeter Oxidation werden Feststoff und kupferhaltige Flüssigkeit voneinander getrennt.

Mit dem in der EP 0210418 beschriebenen Verfahren erhält man dann einen deponiefähigen, stichfesten, nicht gasenden, keine eluierbaren Schwermetalle enthaltenden und im Sinne der Erfindung thermisch inerten Feststoff, der ordnungsgemäß deponiert werden kann.

Gegenstand der vorliegenden Erfindung ist nun ein Verfahren zur Aufarbeitung von bei der Organochlorsilansynthese anfallenden hochsiedenden und feststoffhaltigen Rückständen, die hydrolysiert und anschließend oxidiert werden, dadurch gekennzeichnet, daß bei der Hydrolyse und/oder der Oxidation eine oberflächenaktive Substanz aus der Klasse der Alkyl- bzw. Alkylbenzolsulfonate zugesetzt wird, die die Feststoffoberfläche hydrophil einstellt.

Der erfindungsgemäße Zusatz eines oberflächenaktiven Stoffes ist nicht an die Kombination von Hydrolyse und Oxidation gebunden, sondern kann auch bei der Hydrolyse ohne anschließende Oxidation zur Anwendung kommen. In der Regel bewirkt die bessere Benetzung eine weniger ausgeprägte Neigung des Hydrolysates zum Kleben und führt so zu einer geringeren Verschmutzung der produktführenden Anlagenteile.

Die bevorzugte Art der Hydrolyse besteht darin, daß man die oberflächenaktive Substanz dem Wasser oder der stark verdünnten Salzsäure, die dem Rührwerksbehälter mit einem schnellaufenden Scheibenrührer zum Zwecke der Hydrolyse des hochsiedenden und feststoffhaltigen Rückstandes aus der Organochlorsilansynthese zugeführt wird, zusetzt und so die Oberfläche hydrophil einstellt.

Die bevorzugte Art der Oxydation besteht darin, daß man den die Oberfläche hydrophil beeinflussenden Stoff beim Füllen des Oxidationsbehälters der zu oxidierenden Suspension zusetzt. Auch ist es möglich, einen Teil der oberflächenaktiven Substanz bei der Hydrolyse und einen weiteren Teil bei der Oxidation zuzusetzen.

Der überraschende Vorteil der Durchführung des Aufarbeitungsverfahrens gemäß der vorliegenden Erfindung besteht darin, daß man eine bessere Benetzung des zu hydrolysierenden hochsiedenden und feststoffhaltigen Rückstandes und damit verbunden eine effektivere Hydrolyse erreicht und daß bei der Oxidation, die erfindungsgemäß bevorzugt durch Begasen der bei der Hydrolyse erhaltenen Suspension mit technisch reinem Sauerstoff unter gegenüber Atmosphäredruck erhöhtem Druck bei Temperaturen von 80 ± 10°C erfolgt, Flotations- und Schaumbildungseffekte vermieden werden, die die Reaktionsführung negativ beeinflussen können.

Die Art der die Oberfläche beeinflussenden Stoffe kann sehr unterschiedlich sein. Solche Stoffe rekrutieren sich meist aus der Substanzklasse der Tenside und haben somit überwiegend organischen Charakter. Im vorliegenden Fall hat sich die Stoffklasse der Alkyl- und Alkylbenzolsulfonate als geeignet erwiesen.

Alkylsulfonate, die erfolgreich eingesetzt werden können, sind z.B. unter dem Handelsnamen Mersolat H und Mersolat W (Bayer AG) bekannt. Alkylbenzolsulfonate, die ebenfalls wirksam sind, kennt man z.B. unter dem Handelsnamen Marlon A 375 (Chemische Werke Hüls).

Unter Gemischen sind auch Formulierungen zu verstehen, wie sie z.B. als Entschäumer für tensidhaltige Lösungen angewendet werden. Erfolgreich kann man im vorliegenden Fall Entschäumer DNE (Bayer AG), ein Gemisch aus Fettsäureestern und höheren Kohlenwasserstoffen mit carbonsauren Salzen einsetzen. Die oberflächenaktiven Stoffe sind hier nicht aus der Klasse der Alkyl- bzw. Alkylbenzolsulfonate.

Der Fachmann weiß, daß man eine Vielzahl von Verbindungen und Formulierungen verschiedener Verbindungen zur Auswahl hat, und daß der Erfolg meist nach einer Feinabstimmung mit dem jeweils vorliegenden zu benetzenden Medium bedarf. Es ist wichtig, daß die Oberfläche hydrophil eingestellt wird, und daß der Zusatz nicht selbst zu Störungen wie z.B. der Bildung von Seifenschaum führt.

Die benötigte Menge der oberflächenaktiven Substanz ist abhängig von der Menge des in der Suspension vorhandenen Feststoffs und dessen Feinheit.

In den meisten Fällen werden bei der Hydrolyse Suspensionen von 20 bis 30 Gew.-% festen Hydrolysates, bestimmt als feuchter Filterkuchen, angestrebt. Für solche Suspensionen muß man erfahrungsgemäß zwischen 100 und 10000 ppm, berechnet als Gewichtsteile der Wirksubstanz auf die Gesamtmenge der Suspension, einsetzen. Bevorzugt werden Zusätze zwischen 200 und 5000 ppm Wirksubstanz, bezogen auf die gesamte Suspension.

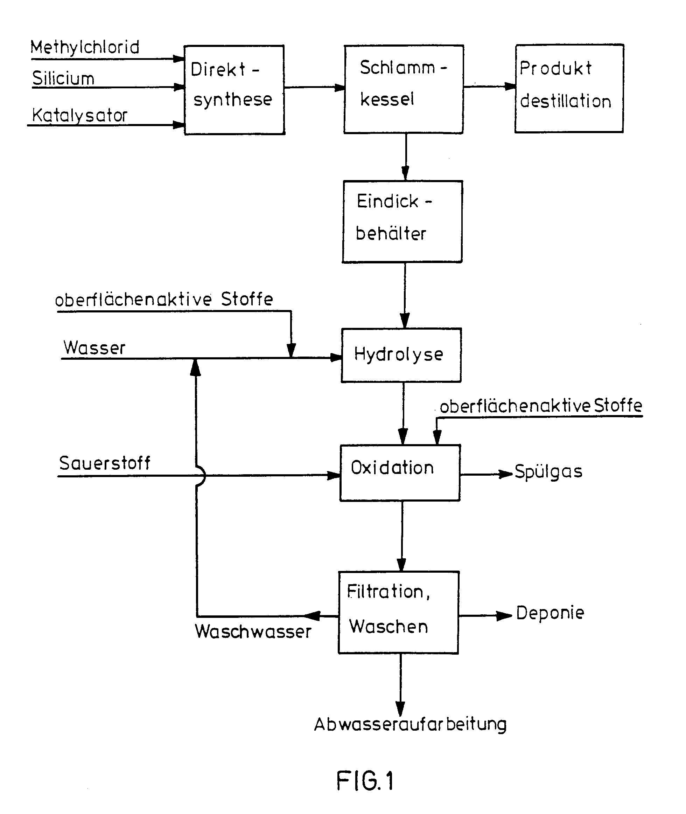

Das bevorzugte Vorgehen gemäß der vorliegenden Erfindung wird anhand der beigefügten Abbildung und der folgenden Beispiele näher erläutert, wobei die Beispiele illustrativen und nicht einschränkenden Charakter haben.

In der Abbildung ist der übliche Verfahrensweg dargestellt: Aus den "Direktsynthesereaktoren" treten gasförmige Reaktionsprodukte, unumgesetztes Methylchlorid und Feinanteile in das Schlammgefäß ein. Hier werden die nichtflüchtigen Bestandteile aufgefangen. Die flüchtigen Bestandteile verlassen das Gefäß, um in die Produktdestillation zu gelangen. Mittels eines Taktventils wird der nichtflüchtige Inhalt entspannt und in einen Eindicker eingeleitet, um bei Atmosphäredruck flüchtige Verbindungen zu gewinnen.

Die Hydrolyse wird in einem mit einem Rührer ausgerüsteten Reaktionsgefäß mit Wasser oder verdünnter HCl durchgeführt.

Oberflächenaktive Stoffe können nun erfindungsgemäß dem für die Hydrolyse benötigten Wasser über die Wasserzuleitung zugesetzt werden oder falls erwünscht erst im nächsten Schritt, nämlich beim Befüllen des Oxidationsreaktors, in dem die Begasung mit dem den elementaren Sauerstoff enthaltenden Gas stattfindet, gegebenenfalls können an beiden Stellen Teilmengen aufgegeben werden. Nach der Oxidation wird mittels einer geeigneten Filtriereinrichtung der Feststoff von der wäßrigen Flüssigkeit getrennt, diese einer geeigneten Abwasserbehandlungsanlage zugeführt und der Feststoff gewaschen und anschließend deponiert. Das Waschwasser kann gegebenenfalls wieder zur Hydrolyse eingesetzt werden.

### Beispiel 1

Das Beispiel 1 zeigt die Beeinflussung des Schäumens einer hydrolysierten Suspension unter Begasung mit Luft durch den Zusatz von Waschmittelrohstoffen aus der Gruppe der Alkyl- bzw. Alkylbenzolsulfonate.

In einer Begasungsapparatur mit drei Strömungsbrechern und einem Begasungsrührer wurden 3 kg einer Hydrolyse-Suspension mit 20 Gew.-% feuchtem Feststoff, die aus der technischen Direktsynthese stammte, begast (Begasungsrührer Durchm. = 4,6 cm, Rührgeschwindigkeit 1585 ±30 UpM, Gefäßdurchmesser = 15 cm, Gefäßhöhe 60 cm, Füllhöhe ca. 17,5 cm). In einem weiteren Ansatz unter o. g. Bedingungen wurden der Suspension vor der Begasung 2 g einer 30%igen Lösung von Mersolat ® (Bayer AG) zugesetzt. Einem dritten Ansatz wurden 4 g Marlon A 375® (Chemische Werke Marl Hüls) zugesetzt. Das Verhalten ist in Tabelle 1 dargestellt.

**Tabelle 1**

| Zusatz | Schaumhöhe | Absetzverhalten des Feststoffes nach Beendigung der Begasung |
|---|---|---|
| Vergleichsversuch ohne Zusatz | 11 cm | ca. 50 % des Feststoffes schwimmen auf |
| 2 g Mersolat H (30 %) | 1 cm | mehr als 90 % des Feststoffes sedimentieren |
| 4 g Marlon A 375 (30 %) | 1 cm | mehr als 90 % des Feststoffes sedimentieren |
| Mersolat H: Natriumalkylsulfonat Marlon A 375: Natriumalkylbenzolsulfonat | | |

### Beispiel 2 (Vergleich)

In der im Beispiel 1 beschriebenen Apparatur wurde eine Suspension, die unter Begasungsbedingungen ohne Zusatz eines oberflächenaktiven Stoffes eine 18 cm hohe Schaumschicht bildet, mit je 5000 ppm, bezogen auf die Suspension, der organischen Entschäumer DNE bzw. OC 6003 versetzt.

Im Falle des Zusatzes von Entschäumer DNE wurde die Schaumhöhe auf 3 cm reduziert. Im Falle des Zusatzes von Entschäumer OC 6003 verblieb ebenfalls ein Restschaum von 3 cm Höhe.

Während nach der Unterbrechung der Begasung in der unbehandelten Suspension ca. 80 % des Feststoffes an der Oberfläche schwammen, sedimentieren bei der Verwendung von Entschäumer DNE ca. 50 % des Feststoffes und bei Verwendung des Entschäumer OC 6003 nahezu 100 % des Feststoffes.
Entschäumer DNE (Bayer AG):
Mischung aus Fettsäureestern und höheren Kohlenwasserstoffen mit carbonsauren Salzen.
Entschäumer VPOC 6003 (Bayer AG):
Alkylpolypropylenpolyethylenglycolether

## Patentansprüche

1. Verfahren zur Aufarbeitung von bei der Organochlorsilansynthese anfallenden hochsiedenden und feststoffhaltigen Rückständen, die hydrolysiert und gegebenenfalls anschließend mit sauerstoffhaltigen Gasen oxidiert werden: dadurch gekennzeichnet, daß bei der Hydrolyse und/oder der Oxidation oberflächenaktive Substanzen aus der Klasse der Alkyl- bzw. Alkylbenzolsulfonate zugesetzt werden, die die Feststoffoberfläche gezielt hydrophil einstellen.

2. Verfahren nach Anspruch 1, dadurch gekennzeichnet, daß die oberflächenaktiven Substanzen in Mengen von 100 ppm bis 10000 ppm, bezogen auf die Hydrolysesuspension, eingesetzt werden.

## Claims

1. A process for working up high-boiling, solids-containing residues obtained in the synthesis of organochloro-silanes which are hydrolyzed and then optionally oxidized with oxygen-containing gases, characterized in that surface-active agents from the class of alkyl or alkylbenzene sulfonates which hydrophilicize the surface of the solids are added during the hydrolysis and/or oxidation.

2. A process as claimed in claim 1, characterized in that the surface-active agents are used in quantities of 100 ppm to 10,000 ppm, based on the hydrolysis suspension.

## Revendications

1. Procédé pour le traitement des résidus à haut point d'ébullition et contenant des matières solides obtenus à la synthèse des organochlorosilanes et qui sont hydrolysés et le cas échéant ensuite oxydés par des gaz contenant de l'oxygène, caractérisé en ce que, à l'hydrolyse et/ou à l'oxydation, on ajoute des substances tensioactives de la classe des alkyl- ou des alkylbenzène-sulfonates qui hydrophilisent la surface des matières solides.

2. Procédé selon revendication 1, caractérisé en ce que les substances tensioactives sont ajoutées en quantités de 100 à 10 000 ppm par rapport à la suspension d'hydrolyse.
